# EUROPEAN PATENT SPECIFICATION

(11) **EP 0 226 915 B1**
(45) Date of publication and mention of the grant of the patent: **28.07.1993**
(21) Application number: 86116977.9
(22) Date of filing: 06.12.1986
(51) Int. Cl.: F02M 3/07, F02P 5/10

(54) **A device for reducing the polluting emissions of a heat engine**
Vorrichtung zur Herabsetzung schädlicher Abgase einer Brennkraftmaschine
Dispositif pour réduire les émissions nocives d'un moteur à combustion

(30) Priority: 23.12.1985 IT 6810185
(43) Date of publication of application: 01.07.1987
(73) Proprietor: FIAT AUTO S.p.A., 10135 Torino (IT)
(72) Inventor: Marchetti, Aldo, I-10100 Torino (IT); Schiavuzzi, Roberto, I-10100 Torino (IT)
(74) Representative: Prato, Roberto

(56) References cited:
- FR-A- 1 526 125
- US-A- 3 687 120
- US-A- 4 060 063
- US-A- 4 168 680
- US-A- 4 202 173
- US-A- 4 220 126

## Description

The present invention relates to a device for reducing the polluting emissions from a heat engine equipped with associated devices for controlling the operation of the engine under normal working conditions, actuated by the depression in the induction manifold. In particular the invention relates to a device for reducing the emissions when the temperature of the coolant liquid is less than 35°C.

It is known, e.g. from U.S.-A-3,687,120, that for the purpose of improving the combustion and consequently reducing the emission of pollutants and the fuel consumption, motor vehicle heat engines, in particular petrol engines, are equipped with a series of control devices designed and optimised for working in the normal operating conditions of the engine and which are controlled by the depression in the induction manifold; one such device, for example, is the so-called "minimum speed" device which prevents the complete closure of the carburettor butterfly valve during deceleration; another device is the digital electronic ignition, which calculates the ignition advance and, more generally, controls all the operations of the engine. A third device is that which determines the enrichment to impart to the fuel-air mixture during acceleration. It is likewise known that the optimum conditions for correct combustion vary according to whether the engine is hot or cold, and that motor vehicle engines develop a high level of polluting emissions not only when the temperature of the coolant liquid of the engine is less than the optimum operating value, but also between 35°C and the working temperature (about 90°C), in that just those devices which improve the operation of the engine when at its working temperatures considerably worsen it when the engine is cold. It is easy to imagine the consequences on the environment, especially that of large cities, of such a situation, when it is seen that in the winter months a vehicle which has just started can travel for several kilometres before the motor reaches its working temperature.

The object of the invention is that of providing a device for reducing to the minimum the polluting emissions at a temperature less than the working temperature of a heat engine equipped with said control devices.

The said object is achieved by the invention in that it relates to a device for reducing the polluting emissions of a heat engine equipped with associated devices adapted to control the engine operation as defined in Claim 1.

For a better understanding of the invention there is now given a non-limitative description thereof with reference to the attached drawings, in which:
Figure 1 schematically illustrates a heat engine provided with associated control devices and with the anti-pollution device forming the subject of the invention; and
Figure 2 qualitatively illustrates the ignition advance/speed of revolution diagrams which regulate the engine equipped with the device of the invention.

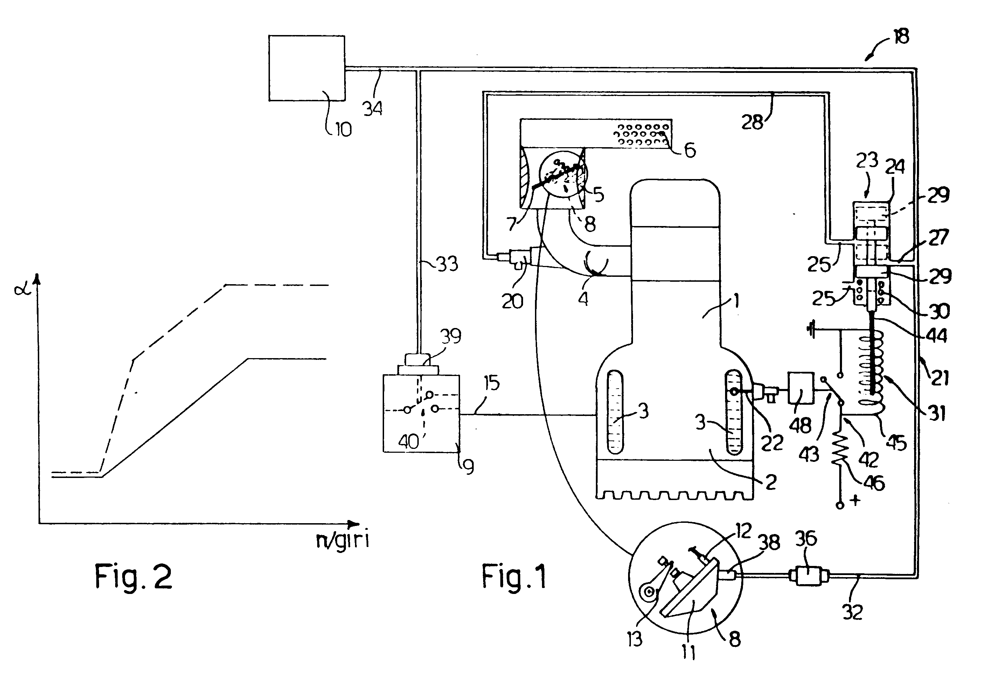

With reference to Figure 1, a heat engine is schematically indicated with the reference numeral 1, which engine may be of any known type provided with a cylinder block 2 cooled by means of a cooling jacket 3 in which circulates an appropriate coolant liquid (for example water), and an induction manifold 4 on which is mounted, for example, a carburettor 5 of known type surmounted by an air filter 6 the butterfly valve 7 of which is provided with a known regulation device 8 illustrated in position on the carburettor 5 in broken outline, and illustrated on an enlarged scale, as a detail, within the circle lying under the engine 1, for example, constituted by a "minimum speed" device or "dashpot" of any known type. The engine 1, as well as being equipped with the device 8, is also equipped with a digital electronic ignition system 9 schematically shown as a block, and with a further pneumatic control device 10 of any known type, schematically indicated as a block and for example constituted by an acceleration phase enrichment device. As is well known in the art, the device 8 is constituted by a pneumatic, diaphragm actuator 11 connected in a known way, not illustrated for simplicity, by means of a pneumatic line 12 and a delay valve, to the induction manifold 4 in such a way as to be actuated by the depression existing therein during deceleration with the engine 1 rotating at a high number of revolutions to displace a small arm 13 connected to the butterfly 7 in such a way as to prevent complete closure thereof. Similarly, the devices 9 and 10 are also connected in a known way, not illustrated for simplicity, to the manifold 4, in such a way as to be controlled by the depression present in this latter; for example the ignition system 9 is connected to the engine 1 through a signal line 15 along which it receives signals from numerous known sensors, not illustrated, disposed on the engine 1, among which there is also always included, as is known, a sensor detecting the depression in the manifold 4, which transmits to the engine 1, again along the line 15, control signals which, when the engine 1 is in its working conditions, ensure that the characteristic curve of variation of the angle of ignition advance with respect to the speed of revolution of the engine is that illustrated in solid outline in Figure 2.

According to the invention the engine 1 is further equipped with a device 18 operable to reduce the polluting emissions of this engine during cold running; overall the device 18 comprises a vacuum take-off 20 disposed on the induction manifold 4, a pneumatic circuit 21 connected to the control devices 8, 9 and 10, a sensor 22 for detecting the temperature of the coolant liquid of the engine 1, and a three-way valve 23 of any known type, operable selectively to connect the circuit 21 with the atmosphere and with the vacuum take-off 20 in such a way that the said circuit experiences, respectively, the depression present in the manifold 4 or else the atmospheric pressure; in particular the valve 23 is a soleanoid valve of slidable spool type comprising a body 24 having three outlets 25, 26 and 27 respectively connected to the atmosphere, the vacuum take-off 20 through a pneumatic line 28, and the circuit 21, a spool 29 which is slidable in the body 24 against the action of a spring 30, and an electromagnet 31 preferably of the type operable to attract the spool 29 in such a way as to compress the spring 30 when it is excited. The spool 29 and, consequently, the valve 23 as a whole, is able to assume two positions in a first of which, illustrated in solid outline in Figure 1, it connects the outlet 26 with the outlet 27 isolating the outlet 25 in such a way as to connect the vacuum take-off 20 with the circuit 21, and in a second of which, illustrated in broken outline in Figure 1, it connects the outlet 25 with the outlet 27 isolating the outlet 26 in such a way as to connect the circuit 21 with the atmosphere. This latter comprises respective branches 32, 33 and 34 by means of which it is connected to the associated devices 8, 9 and 10 in such a way as to alter their normal operation in dependence on the whether the circuit 21 is connected to the atmosphere or the vacuum take-off 20. In particular, the branch 34 is connected to the device 10 in a known way such as to exclude its operation when the atmospheric pressure is present in the circuit 21, and the branch 32 is provided in series with a delay valve 36 and is connected to the device 8 in such a way as to exclude its operation when, on the other hand, the depression in the manifold 4 is present in the circuit 21; for this purpose a take-off 38 of the pneumatic actuator 11, which, as is well known to those skilled in the art, would have to be connected permanently to the atmosphere is, on the other hand, connected in a fluid tight manner to the branch 32. At the end of the branch 33 there is on the other hand connected a pressure switch 39 of known type, which is connected to the ignition device 9 in any suitable way to vary the characteristic curve of the angle of advance in dependence on the speed of rotation of the engine from that illustrated in solid outline in Figure 2 to that illustrated in broken outline in Figure 2. For example, with a digital ignition system 9, the pressure switch 39 can be mechanically connected to a selector device 40 within the device 9 which directs the controlling microprocessor towards two different memory register units in which the data of the two curves of Figure 2 are memorised; in any case the connection is effected in such a way that the device 40 selects the broken outline curve of Figure 2 when the depression in the manifold 4 is present in the circuit 21 and, vice versa, selects the other curve when the atmospheric pressure is present in the circuit 21.

According to the invention the valve 23 is controlled by the temperature sensor 22 through suitable control means including, in the illustrated example, an electrical supply circuit 42 for the electromagnet 31 and a switch 43 actuated directly by the sensor 22 and connected to the circuit 42 in such a way that its actuation causes the energisation or de-energisation of the electromagnet 31. In particular, the electromagnet 31 includes a core 44 mechanically connected to the spool 29 and an inductor 45 connected to the circuit 42 in parallel with the switch 43, and the circuit 42 includes a resistor 46 disposed upstream of the switch 43; the sensor 22 in turn includes a sensor element 48 of the double-threshold type which is calibrated to commute at two predetermined temperatures in such a way, for example, as to hold the switch 43 closed when the temperature of the coolant liquid of the engine 1 lies between a minimum value, for example 35°C and a maximum value, for example 90°C; below and above these temperatures, respectively, which constitute respective intervention thresholds of the sensor 22, the element 48 holds the switch 43 open, in fact, since up to about 35°C it is not possible, for reasons of performance of the vehicle, to intervene to reduce the pollution without utilising complex and costly means, the device of the invention intervenes in the temperature interval between about 35°C and the working temperature (about 90°C).

When the electromagnet 31 is de-energised the spring 30 is at rest and maintains the spool 29 in the broken outline position (Figure 1) constituting the said second position of the valve 23; on the other hand, when the electromagnet 31 is energised, the core 44 is attracted by the inductor 43 and maintains the spool 29 in the position illustrated in solid outline, with the spring 30 compressed and the valve 23 disposed in the said first position. In use, therefore, when the engine 1 is started from cold, there is a flow of current in the circuit 42 and, since the temperature of the coolant is less than 35°C the switch 43 remains open. Consequently the electromagnet 31 is energised, the valve 23 is in the first position and the pressure in the circuit 24 is the depression in the manifold 4, the circuit 24 being connected by the valve 23 to the take-off 20; the depression therefore acts on the device 10, which is active, and on the device 8, which on the other hand is disactivated; the pressure switch 39 selects the broken outline curve (Figure 2) for the device 9 and therefore increases the ignition advance. In these conditions, an optimum ignition advance during cold running is obtained, as far as the effects on consumption and the emission of unburned pollutants is concerned, the minimum speed device is excluded so that the total braking effect of the engine during deceleration is experienced and, if the device 10 is an enrichment device, there is an enrichment of the air-fuel mixture during acceleration, which permits the mixture formed by the carburettor 5 to be kept lean. Gradually as the operation of the engine 1 proceeds the coolant progressively heats until it exceeds the first calibration temperature of the element 48 of the sensor 22, for example 35°C; at this point the switch 43 closes short circuiting the inductor 45, and consequently the electromagnet 31 is de-energised and the spring 30 carries the valve 23 to its second operating position; the spool 29 thus connects the circuit 21 with the atmosphere, excluding the depression in the manifold 4. Consequently, the device 10 is excluded, the pressure switch 39 detects the variation in pressure in the branch 33 and commutes the device 40 in such a way as to select for the device 9 the solid line operating curve (Figure 2) and the device 8 is activated in that now the take-off 38 is connected to the atmosphere through the branch 32 and the valve 23, and controlled in its stroke by the valve 36. In these conditions the ignition advance is varied solely as a function of the angular velocity of the engine, the full effect of the "minimum speed device" upon deceleration is available with a reduction in the fuel consumption during working conditions and possible enrichment of the mixture imparted by the device 10 is excluded. Upon further operation the temperature of the coolant liquid of the engine 1 continues to rise until it reaches the second calibration temperature of the element 48, for example 90°C, which corresponds to the optimum working temperature of the engine 1; at this point the sensor 2 reopens the switch 43 consequently causing excitation of the electromagnet 31 and commutation of the valve 23 into the preceding position so that the depression acts on the device 10, which is activated, and on the device 8 which, on the other hand, is disactivated whilst the pressure switch 39 again selects in the device 9 the broken outline curve (Figure 2) and therefore increases the ignition advance. In these conditions the ignition advance is set at an optimum value for the effect on fuel consumption and unburnt fuel emission, the minimum speed device is excluded so that the full braking effect of the engine upon deceleration is available and, if the device 10 is an enrichment device, there is enrichment of the fuel-air mixture upon acceleration, with consequent greater development of power, for example for overtaking, still utilising a lean mixture.

From what has been described the advantages of the invention will be evident; by means of the device described the operation of all those control devices of the engine which in cold running conditions would produce poor combustion if left at the ideal calibration for operation of the engine when hot are modified; once the desired temperature is achieved the device of the invention automatically switches off resetting the control devices into the normal operating conditions; moreover, in the case of failure the device of the invention remains switched off in that if there is no current in the circuit 42 the spring 30 maintains the valve 23 always in the second position, avoiding the possibility that when the engine is hot the control devices may remain positioned in the cold engine setting.

## Claims

1. A device (18) for reducing polluting emissions from a heat engine (1) equipped with associated devices (8,9,10) adapted to control the engine operation, the device being actuated by the depression in the induction manifold, the device (18) comprising a vacuum take-off (20) disposed on the induction manifold (4), a sensor (22) for detecting the temperature of the engine coolant liquid, a pneumatic circuit (21) connected to said control devices (8,9,10), a three-way valve (23) connected respectively to the atmosphere, to said vacuum take-off (20) and to said pneumatic circuit (21), and control means (31) for said three way valve (23) controlled by said temperature sensor (22) and operable, in correspondence with predetermined temperatures, to position said three-way valve in a first position in which said valve (23) connects said pneumatic circuit (21) to said vacuum take-off, and, in correspondence with temperatures different from said predetermined temperatures, in a second position in which said valve (23) connects said pneumatic circuit (21) to the atmosphere; **characterized** in that said pneumatic circuit (21) comprises in combination:
- a first branch (32) provided in series with a delay valve (36), said first branch (32) being connected to a first said control device, namely a minimum speed device (8) operable to prevent the complete closure of the butterfly valve of the carburetor (15) during deceleration, in such a way as to switch off said minimum speed device (8) when the coolant liquid has a temperature less than a first predetermined threshold or greater than a second predetermined threshold; and
- a second branch (33) connected to the end of a pressure switch (39), said pressure switch being connected to a second said control device, namely an electronic ignition device (9) of said engine to vary the characteristic curve of the ignition advance with respect to the speed of rotation of the engine in a sense such as to increase the ignition advance when the coolant liquid has a temperature less than said first predetermined threshold or greater than said second predetermined threshold.

2. A device according to Claim 1, characterized in that said three way valve is a solenoid valve (23), said control means including an electric circuit (42) for supplying an electromagnet (31) designed to control said solenoid valve, and a switch (43) actuated by said sensor (22) which detects the temperature of the engine coolant liquid and is connected to said electric circuit (42) in such a manner as to control the actuation of said electromagnet (31).

3. A device according to Claim 2, wherein said engine coolant liquid temperature sensor (22) is operable to actuate said switch (43) between a temperature of the coolant liquid less than said first predetermined threshold and greater than said second predetermined threshold.

4. A device according to Claim 2 or 3, characterized in that: said three-way valve (23) includes a spool (29) slidable against the action of a spring (30), which is operable to maintain said valve (23) at rest in said second position; and in that said electromagnet (31), when excited, is operable to attract said spool (29) in such a way as to compress said spring (30) and maintain said valve (23) in said first position, said temperature sensor (22) including a sensor element (48) operable to close said switch (43) whereby to short circuit said electromagnet (31) and accordingly de-energize it.

5. A device according to any preceding Claims, wherein said first threshold is 35°C and said second threshold is 90°C.

## Patentansprüche

1. Vorrichtung (18) zur Herabsetzung schädlicher Abgase von einem Verbrennungsmotor (1), der mit zugehörigen Einrichtung (8, 9, 10) ausgestattet ist, die der Regelung des Motorbetriebs dienen, wobei diese Vorrichtung durch die Entspannung in der Ansaugluftleitung betätigt wird, diese Vorrichtung (18) eine Vakuum-Abnahme (20), die auf der Ansaugluftleitung (4) angeordnet ist, einen Sensor (22) zur Bestimmung der Temperatur der Kühlflüssigkeit des Motors, einen Druckluftkreis (21), der mit den Regeleinrichtungen (8, 9, 10) verbunden ist, ein Dreiwegeventil (23), das mit der Atmosphäre, der Vakuum-Abnahme (20) bzw. dem Druckluftkreis (21) verbunden ist, und eine Regeleinrichtung (31) für das Dreiwegeventil (23) umfaßt, die vom Temperatursensor (22) gesteuert wird und in Übereinstimmung mit bestimmten Temperaturen betätigt werden kann, um das Dreiwegeventil in eine erste Position, in der das Ventil (23) den Druckluftkreis (21) mit der Vakuum-Abnahme verbindet, und in Übereinstimmung mit von diesen bestimmten Temperaturen verschiedenen Temperaturen in eine zweite Position zu bringen, in der das Ventil (23) den Druckluftkreis (21) mit der Atmosphäre verbindet,
dadurch **gekennzeichnet,** daß der Druckluftkreis (21) in Kombination umfaßt:
- eine erste Verzweigung (32), die in Reihe mit einem Verzögerungsventil (36) verbunden ist, wobei diese erste Verzweigung (32) mit der ersten Regeleinrichtung, und zwar eine Minimalgeschwindigkeits-Einrichtung (8) verbunden ist, die so betätigt werden kann, daß sie das vollständige Schließen der Ventilklappe des Vergasers (15) während der Geschwindigkeitsabnahme in der Weise verhindert, daß die Minimalgeschwindigkeits-Einrichtung (8) abgeschaltet wird, wenn die Kühlflüssigkeit eine Temperatur unterhalb des ersten bestimmten Schwellwerts oder oberhalb des zweiten bestimmten Schwellwerts hat; und
- eine zweite Verzweigung (33), die mit dem Ende des Druckschalters (39) verbunden ist, wobei dieser Druckschalter mit der zweiten Regeleinrichtung, und zwar der elektronischen Zündungseinrichtung (9) des Motors verbunden ist, um die charakteristische Kurve der Zündvorverstellung im Verhältnis zur Rotationsgeschwindigkeit des Motors in dem Sinn zu verstellen, daß die Zündvorverstellung zunimmt, wenn die Kühlflüssigkeit eine Temperatur unterhalb des ersten bestimmten Schwellwerts oder oberhalb des zweiten bestimmten Schwellwerts hat.

2. Vorrichtung nach Anspruch 1, dadurch **gekennzeichnet,** daß das Dreiwegeventil ein Magnetventil (23) ist, die Regeleinrichtung einen elektrischen Kreis (42) zur Speisung des Elektromagneten (31), der der Regelung des Magnetventils dient, und einen Schalter (43) umfaßt, der vom Sensor (22) betätigt wird, der die Temperatur der Kühlflüssigkeit des Motors bestimmt und mit dem elektrischen Kreis (42) in der Weise verbunden ist, daß die Betätigung des Elektromagneten (31) geregelt wird.

3. Vorrichtung nach Anspruch 2, worin der Temperatursensor (22) für die Kühlflüssigkeit des Motors betrieben werden kann, um den Schalter (43) zwischen einer Temperatur der Kühlflüssigkeit unterhalb des ersten bestimmten Schwellwerts und oberhalb des zweiten bestimmten Schwellwerts zu betätigen.

4. Vorrichtung nach Anspruch 2 oder 3, dadurch **gekennzeichnet,** daß das Dreiwegeventil (23) eine Spule (29) umfaßt, die gegen die Wirkung der Feder (30) gleiten kann, die so betätigt werden kann, daß das Ventil (23) in der zweiten Position ruhend gehalten werden kann; und daß der Elektromagnet (31) bei Anregung so arbeiten kann, daß er die Spule (29) in der Weise anzieht, daß die Feder (30) zusammengedrückt und das Ventil (23) in der ersten Position gehalten wird, wobei der Temperatursensor (22) ein Sensorelement (48) umfaßt, das das Schließen des Schalters (43) bewirkt, wodurch der Elektromagnet (31) kurzgeschlossen und folglich entregt wird.

5. Vorrichtung nach einem der vorstehenden Ansprüche, worin der erste Schwellwert 35°C und der zweite Schwellwert 90°C betragen.

## Revendications

1. Dispositif (18) pour réduire les émissions polluantes d'un moteur à combustion (1) équipé de dispositifs associés (8,9,10) prévus pour commander le fonctionnement du moteur, le dispositif étant actionné par la dépression engendrée dans la tubulure d'admission, le dispositif (18) comprenant une prise de vide (20) prévue sur la tubulure d'admission (4), un capteur (22) pour détecter la température du liquide de refroidissement du moteur, un circuit pneumatique (21) connecté aux dits dispositifs de commande (8,9,10), une vanne à trois voies (23) connectées respectivement à l'atmosphère, à ladite prise de vide (20) et audit circuit pneumatique (21), et des moyens de commande (31) de ladite vanne à trois voies (23) commandés par ledit capteur de température (22) et agissant, en correspondance avec des températures prédéterminées, de manière à amener la dite vanne à trois voies à une première position, dans laquelle ladite vanne (23) connecte ledit circuit pneumatique (21) à ladite prise de vide, et, en correspondance avec des températures différentes desdites températures prédéterminées, à une deuxième position dans laquelle ladite vanne (23) met ledit circuit pneumatique (21) à l'atmosphère ; caractérisé en ce que ledit circuit pneumatique (21) comprend, en combinaison :
- une première branche (32) comportant en série une vanne de temporisation (36), ladite première branche (32) étant connectée à un premier desdits dispositifs de commande, à savoir un dispositif de vitesse minimale (8) agissant pour empêcher la fermeture complète du papillon du carburateur (15) pendant la décélération, de manière à mettre hors service ledit dispositif de vitesse minimale (8) lorsque le liquide de refroidissement est à une température inférieure à un premier seuil prédéterminé ou supérieure à un deuxième seuil prédéterminé; et
- une deuxième branche (33) connectée à l'extrémité d'un manocontact (39), ledit manocontact étant connecté à un deuxième desdits dispositifs de commande, à savoir un dispositif d'allumage électronique (9) dudit moteur pour modifier la courbe caractéristique de l'avance à l'allumage en fonction de la vitesse de rotation du moteur dans un sens d'augmentation de l'avance à l'allumage lorsque le liquide de refroidissement est à une température inférieure audit premier seuil prédéterminé ou supérieure audit deuxième seuil prédéterminé.

2. Dispositif suivant la revendication 1, caractérisé en ce que ladite vanne à trois voies est une électrovanne (23), lesdits moyens de commande incluant un circuit électrique (42) pour alimenter un électro-aimant (31) conçu pour commander ladite électrovanne, et un contact électrique (43) actionné par ledit capteur (22) qui détecte la température du liquide de refroidissement du moteur et connecté audit circuit électrique (42) de manière à commander l'excitation dudit électro-aimant (31).

3. Dispositif suivant la revendication 2, dans lequel ledit capteur de température du liquide de refroidissement du moteur (22) agit pour actionner ledit contact électrique (43) entre une température du liquide de refroidissement inférieure audit premier seuil prédéterminé et une température supérieure audit deuxième seuil prédéterminé.

4. Dispositif suivant la revendication 2 ou 3, caractérisé en ce que ladite vanne à trois voies (23) comprend un tiroir (29) pouvant coulisser contre l'action d'un ressort (30), qui agit pour maintenir ladite vanne (23) au repos à ladite deuxième position ; et en ce que ledit électro-aimant (31), lorsqu'il est excité, agit pour attirer ledit tiroir (29) de manière à comprimer ledit ressort (30) et à maintenir ladite vanne (23) à ladite première position, ledit capteur de température (22) incluant un élément de détection (48) qui agit pour fermer ledit contact électrique (43) de manière à court-circuiter ledit électro-aimant (39) et donc à le désex-citer.

5. Dispositif suivant l'une quelconque des revendications précédentes, dans lequel ledit premier seuil est de 35°C et ledit deuxième seuil est de 90°C.
